# EUROPEAN PATENT SPECIFICATION

(11) **EP 0 548 395 B1**
(45) Date of publication and mention of the grant of the patent: **10.04.1996**
(21) Application number: 91122134.9
(22) Date of filing: 23.12.1991
(51) Int. Cl.: B65H 75/00

(54) **Roll of adhesive tape pieces and method of applying adhesive tape piece**
Rolle von Klebebandstücken und Verfahren zum Aufbringen eines Klebebandstückes
Rouleau de morceaux de ruban adhésif et méthode pour appliquer un morceau de ruban adhésif

(43) Date of publication of application: 30.06.1993
(73) Proprietor: NITTO DENKO CORPORATION, Osaka (JP)
(72) Inventor: Kameda, Susumu c/o Nitto Denko Corporation, Ibaraki-shi, Osaka (JP); Sano, Msasanori c/o Nitto Denko Corporation, Ibaraki-shi, Osaka (JP); Suenaga, Kazuo c/o Nitto Denko Corporation, Ibaraki-shi, Osaka (JP)
(74) Representative: Grünecker, Kinkeldey, Stockmair & Schwanhäusser Anwaltssozietät

(56) References cited:
- CH-A- 605 320
- FR-A- 1 404 433
- US-A- 3 143 208
- US-A- 3 737 028

## Description

### FIELD OF THE INVENTION

The present invention relates to a roll of adhesive tape pieces and a method of applying the adhesive tape pieces. More particularly, this invention relates to a roll of adhesive tape pieces which can be used when adhesive tape pieces bearing a certain printed information such as a system of printed bar-code signals are applied to articles, and also relates to a method of applying these adhesive tape pieces.

### BACKGROUND OF THE INVENTION

In a conventional method for applying adhesive tape pieces bearing certain printed information such as a system of bar-code signals to substrates, a roll of such adhesive tape pieces is prepared beforehand by forming a pressure-sensitive adhesive layer on the back side of a tape backing which has been printed on its front side with systems of bar-code signals at predetermined intervals and then rolling up this tape, and the rolled tape is used by unwinding the tape by a desired length, cutting the unwound part of the tape to prepare adhesive tape pieces each bearing the bar-code signal system, and then applying these adhesive tape pieces to substrates.

Such a method, however, has the following disadvantages. If the tape backing is soft and lacks rigidity, there often are cases that when the tape is unwound and applied to substrates, the adhesive tape pieces are bent, rumpled, or otherwise deformed and air is included between the adhesive tape pieces and the substrates. Hence, bars or spaces in the bar-code signal system are deformed, resulting in errors in reading by a bar code reader. If the tape backing is too rigid, air inclusion between the adhesive tape pieces and the substrates occurs more frequently because of the poor follow-up properties of the adhesive tape pieces, although the trouble caused by the deformation of the tape backing is eliminated, and the air inclusion causes bars or spaces in the bar-code signal system to be deformed, resulting also in erroneous reading by a bar code reader.

On the other hand, it is also known that adhesive tape pieces bearing a certain printed information are temporarily fixed onto a liner and thereafter the adhesive tape pieces are peeled from the liner and applied to substrates. However, this method has the same problem as described above. That is, the adhesive tape pieces are bent, rumpled, or otherwise deformed and air inclusion occurs between the adhesive tape pieces and the substrates; hence, bars or spaces in the bar-code signal system are deformed and the resulting bar-code signals are read erroneously by a bar code reader. In addition, another problem is posed concerning the disposal of separators used.

CH-A-605 320 discloses a roll of adhesive tape pieces according to the preamble of claim 1, comprising a cylindrical core wound thereon adhesive tape pieces attached to a support tape. The tape pieces comprise a backing, having formed on one side thereof a pressure-sensitive adhesive layer. The adhesive tape pieces are wound on the core in such a manner that the pressure-sensitive adhesive layer faces outwardly. Due to the presence of the support tape the operation step of transferring the adhesive tape pieces to a substrate cannot be monitored. Furthermore, the support tape must be cut when the adhesive tape pieces are transferred to the substrate. In addition, the support tape must be peeled off and remains as a waste.

### SUMMARY OF THE INVENTION

One object of the present invention is to provide a roll of adhesive tape pieces which ensures that the adhesive tape pieces are applied to substrates without being bent, rumpled, or otherwise deformed and without inclusion of air between the adhesive tape pieces and the substrate.

Another object of the present invention is to provide a method of applying the above-described rolled adhesive tape pieces to substrate surfaces.

The roll of adhesive tape pieces in accordance with the present invention comprises a cylindrical core and, wound thereon, two or more adhesive tape pieces each comprising a backing having formed on one side thereof a pressure-sensitive adhesive layer, the two or more adhesive tape pieces being wound on the core successively with the pressure-sensitive adhesive layers facing outward and with any successive two adhesive tape pieces of the two or more adhesive tape pieces being placed end to end or apart from each other so that the back end of the preceding tape piece and the front end of the succeeding tape piece meet each other substantially without a space or are apart from each other with a predetermined space characterized in the first-wound adhesive tape piece being in contact with the cylindrical core, and adhesive tape piece (s) wound after the first-wound adhesive tape piece being supported by an adhesive tape piece underlying it, thereby forming a roll of adhesive tape pieces.

The method of applying an adhesive tape piece in accordance with the present invention comprises revolving the roll of adhesive tape pieces as described above on a surface of a substrate, thereby to transfer and bond the adhesive tape pieces to the substrate.

### BRIEF DESCRIPTION OF THE DRAWINGS

Figure 1 is a view illustrating one embodiment of the roll of adhesive tape pieces of the present invention;
Figure 2 is a view illustrating a method of producing the roll of adhesive tape pieces as shown in Fig. 1; and
Figure 3 is a view illustrating one embodiment of the method of applying an adhesive tape piece according to the present invention.

### DETAILED DESCRIPTION OF THE INVENTION

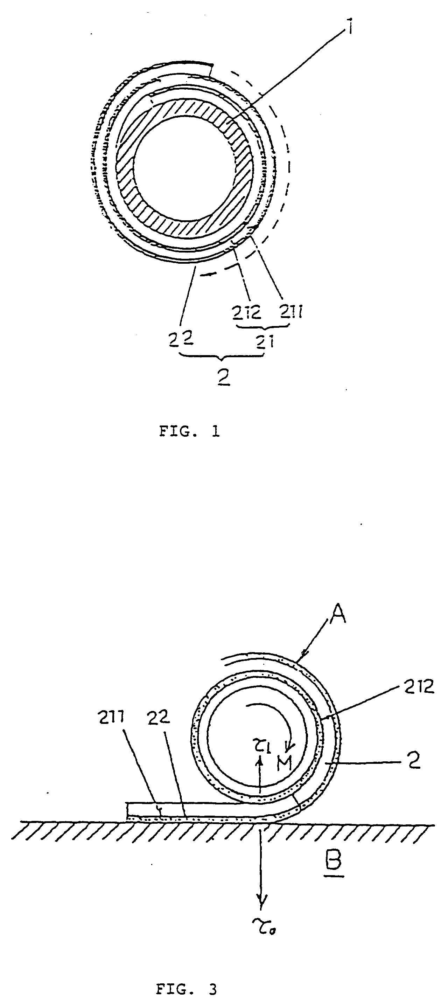

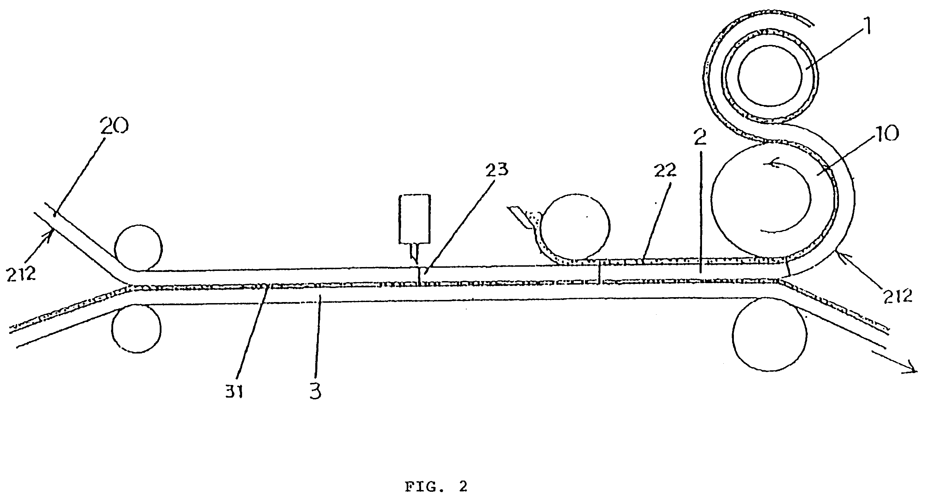

One embodiment of the roll of adhesive tape pieces according to the present invention is explained below by reference to Fig. 1.

In Fig. 1, numeral 1 denotes a cylindrical core, which may be a cylinder made of a paperboard or a rigid plastic. Numeral 2 denotes adhesive tape pieces each comprising a backing 21 which is provided on one side 211 with a pressure-sensitive adhesive layer 22 and provided on the other side 212 with a certain printed information, e.g., a system of bar-code signals. The adhesive tape pieces 2 are wound on the cylindrical core 1 in a manner such that the adhesive layers 22 face outward and any successive two adhesive tape pieces of the adhesive tape pieces 2 are placed end to end or apart from each other so that the back end of the preceding tape piece and the front end of the succeeding tape piece meet each other substantially without a space or are apart from each other with a predetermined space. In producing this roll, a double-faced pressure-sensitive adhesive tape is first bonded to the outer wall of the cylindrical core 1 and adhesive tape pieces are then wound successively on the double-faced pressure-sensitive adhesive tape. Thus, the first-wound adhesive tape piece in contact with the cylindrical core is supported by the double-faced pressure-sensitive adhesive tape and any of the adhesive tape pieces wound after the first-wound adhesive tape piece is supported by an adhesive tape piece underlying it, thereby forming a roll of adhesive tape pieces.

It is preferred that the surface 212 of the backing 21 in each adhesive tape piece 2 undergoes a release treatment such as a silicone treatment.

The above-described roll of adhesive tape pieces may be produced, for example, by the method shown in Fig. 2. Illustratively stated, a tape 20 which has been printed on one side 212 with a plurality of systems of certain informational symbols such as systems of bar-code signals at predetermined intervals is bonded on a supporting tape 3 having an adhesive layer 31, in a manner such that the one side 212 contacts with the adhesive layer 31. Subsequently, the tape 20 bearing printed bar-code signal systems is cut to form gaps 23 ... between the bar-code signal systems, and an adhesive 22 is then coated on this tape 20 bearing printed bar-code signal systems and separated by the gaps 23 .... The resulting tape 20 bearing printed bar-code signal systems and separated by the gaps is transferred to the surface of a roll 10 such that the adhesive layer 22 contacts with the surface of the roll 10, while peeling the adhesive layer-possessing supporting tape 3 from the tape 20, and the tape 20 is transferred to the outer circumferential surface of a cylindrical core 1 located just upper the roller 10, while peeling the adhesive layer 22 from the surface of the roller 10.

In this method, the surface 212 of the tape 20 bearing printed bar-code signal systems which surface contacts with the supporting tape 3 has undergone a release treatment, so that the transfer of the tape 20, which bears printed bar-code signal systems and is separated by gaps, to the surface of the roll 10 from the supporting tape 3 can be conducted smoothly. Further, the outer surface of the roller 10 has also undergone a release treatment, so that the transfer of the tape 20, which bears printed bar-code signal system and is separated by gaps, to the cylindrical core 1 from the roller 10 by the adhesive layer 22 at the outer surface of the tape already wound on the cylindrical core 1 (in the initial stage, a double-side adhesive tape adhered on the outer surface of the cylindrical core 1) can be conducted smoothly.

In applying an adhesive tape piece to an article in accordance with the method of the present invention, the above-described adhesive tape piece roll A is placed on an article B and revolved in the predetermined direction, as shown in Fig. 3.

In order to transfer the adhesive tape piece 2 onto an article B by this revolution, it is necessary that a bonding force τ₁ between the one side 212 of the adhesive tape piece 2 and the adhesive layer 22 of the adhesive tape piece 2, which contacts with the one side is smaller than a bonding force τ₁ between the adhesive layer 22 and the article 22. This requirement can be easily satisfied by conducting a release treatment of the one side 212 of the adhesive tape piece 2, and the adhesive tape piece 2 can be smoothly transferred to the surface of the article B by this simple and easy treatment.

In Fig. 3, a revolution moment M for revolving the roll A balances a stress τ₁, and there is substantially no function of a tensile force to the adhesive tape piece. Therefore, the adhesive tape piece can be transferred to the surface of an article without occurrence of rumples, bending and the like.

Since the tensile force applied to the adhesive tape piece 2 when the adhesive tape piece 2 is transferred and bonded to the surface of the article B in the above method is uniform over the entire width of the adhesive tape piece 2, the transfer and bonding of the adhesive tape piece to the article surface can be carried out without causing the adhesive tape piece to be bent, rumpled, or otherwise deformed.

Further, since the adhesive tape piece 2 can be transferred and bonded gradually from one end to the other to the article surface as the roll A revolves in one direction, inclusion of air between the adhesive layer of the adhesive tape piece and the article surface can be avoided surely.

If, in the above-described method, the back end of an adhesive tape piece a which is being transferred and bonded to an article surface overlies the front end of a succeeding adhesive tape piece b, the tensile stress of the adhesive tape piece a is transferred to the succeeding adhesive tape piece b and, as a result, there is the possibility that the succeeding adhesive tape piece b might follow the adhesive tape piece a to the article surface. However, according to the method of the present invention, the adhesive tape pieces can be transferred and bonded one after the other to article surfaces, since any successive two adhesive tape pieces in the adhesive tape piece roll do never overlap each other at the adjacent ends thereof.

It is preferred that the positional relationship between successive two adhesive tape pieces in the roll is such that the succeeding adhesive tape piece is completely surrounded by the preceding one.

As described above, according to the adhesive tape piece roll and application method therefor of the present invention, adhesive tape pieces can be transferred and bonded to articles without being bent or rumpled, because the tensile force does not substantially function to the adhesive tape piece being transferred to the articles. Furthermore, since an adhesive tape piece can be transferred and bonded gradually from one end to the other to an article surface, air inclusion can be avoided. Therefore, according to the present invention, adhesive tape pieces bearing printed bar-code signal systems can be bonded to articles without impairing the bar-space ratios.

While the invention has been described in detail and with reference to specific embodiments thereof, it will be apparent to one skilled in the art that various changes and modifications can be made therein without departing from the the subject-matter of the invention as claimed.

## Claims

1. A roll of adhesive tape pieces (2) which comprises a cylindrical core (1) having wound thereon two or more adhesive tape pieces (2) each comprising a backing (21) having formed on one side (211) thereof a pressure-sensitive adhesive layer (22), said two or more adhesive tape pieces (2) being wound on the core (1) successively with the pressure-sensitive adhesive layers (22) facing outward and with any successive two adhesive tape pieces (2) of said two or more adhesive tape pieces (2) being place end to end or apart from each other so that the back end of the preceding tape pieces and the front end of the succeeding tape piece meet each other substantially without a space or are apart from each other with a predetermined space,
**characterized in**
the first-wound adhesive tape piece being in contact with the cylindrical core (1); and
adhesive tape piece(s) wound after the first-wound adhesive tape piece being supported by an adhesive tape piece underlaying it, thereby forming a roll of adhesive tape pieces.

2. A method of applying an adhesive tape piece which comprises revolving the roll (A) of adhesive tape pieces (2) as claimed in claim 1 on a surface of a substrate (B), thereby to transfer and bond the adhesive tape pieces (2) to the substrate.

## Patentansprüche

1. Rolle von Klebebandstücken (2), die einen zylindrischen Kern (1) umfaßt, auf den zwei oder mehr Klebebandstücke (2) gewikkelt sind, von denen jedes eine Trägerschicht (21) umfaßt, auf dessen einer Seite (211) eine Selbstklebeschicht (22) ausgebildet ist, wobei zwei oder mehr Klebebandstücke (2) aufeinanderfolgend mit den Selbstklebeschichten (22) nach außen weisend gewickelt sind und wobei aufeinanderfolgende zwei Klebebandstücke (2) der zwei oder mehr Klebebandstücke (2) auf Stoß oder voneinander getrennt plaziert sind, so daß das hintere Ende des vorhergehenden Bandstückes und das vordere Ende des nachfolgenden Bandstückes aneinander ohne einen wesentlichen Zwischenraum zusammenstoßen oder voneinander mit einem vorbestimmten Zwischenraum getrennt sind,
**dadurch gekennzeichnet,** daß
das erstgewickelte Klebebandstück in Kontakt mit dem zylindrischen Kern (1) ist; und daß das Klebebandstück bzw. die Klebebandstücke, das (die) nach dem zuerst gewickelten Klebebandstück aufgewickelt ist (sind), durch ein darunterliegendes Klebebandstück getragen wird (werden), wodurch eine Rolle von Klebebandstücken gebildet wird.

2. Verfahren zum Aufbringen eines Klebebandstückes, daß das Drehen der Rolle (A) der Klebebandstück (2) wie in Anspruch 1 angegeben ist umfaßt, auf eine Oberfläche eines Substrates (B), um somit die Klebebandstücke (2) auf das Substrat zu übertragen und zu kleben.

## Revendications

1. Rouleau de morceaux (2) de ruban adhésif comprenant un noyau cylindrique (1) et, enroulés sur ce noyau, deux ou plus de deux morceaux (2) de ruban adhésif dont chacun comprend un support (21) sur une (211) des faces duquel est formée une couche (22) d'adhésif sensible à la pression, les deux ou plus de deux morceaux (2) de ruban adhésif étant enroulés successivement sur le noyau (1) dans une position telle que les couches (22) d'adhésif sensible à la pression soient dirigées vers l'intérieur, et que deux morceaux successifs (2) de ruban adhésif des deux ou plus de deux morceaux (2) de ruban adhésif soient placés bout à bout ou espacés l'un de l'autre de telle manière que l'extrémité du morceau de ruban précédent et l'extrémité avant du morceau de ruban suivant se rejoignent l'une l'autre pratiquement sans espace libre ou soient espacées l'une de l'autre d'un espace prédéterminé,
caractérisé
en ce que le morceau de ruban adhésif enroulé en premier lieu soit en contact avec le noyau cylindrique (1) et
que le ou les morceaux de ruban adhésif enroulé(s) après le premier morceau de ruban adhésif enroulé soi(en)t supporté(s) par un morceau de ruban adhésif placé au-dessous de lui, en formant ainsi un rouleau de morceaux de ruban adhésif.

2. Procédé d'application d'un morceau de ruban adhésif qui consiste à faire rouler le rouleau (A) de morceaux (2) de ruban adhésif selon la revendication 1, sur une surface d'un substrat (B), pour transférer et fixer de cette façon les morceaux (2) de ruban adhésif au substrat.
